# EUROPÄISCHE PATENTSCHRIFT

(11) **EP 3 802 305 B1**
(45) Veröffentlichungstag und Bekanntmachung des Hinweises auf die Patenterteilung: **27.12.2023**
(21) Anmeldenummer: 19730913.1
(22) Anmeldetag: 29.05.2019
(51) Int. Cl.: B63B 1/12, B63B 21/50, B63B 35/44, F03D 13/20, F03D 13/25, F03D 13/10, B63B 22/02

(54) **SCHWIMMENDE PLATTFORM FÜR DIE BEFESTIGUNG EINER SCHWIMMENDEN WINDENERGIEANLAGE AN EINEM GEWÄSSERGRUND**
FLOATING PLATFORM FOR FASTENING A FLOATING WIND TURBINE ON A BED OF A BODY OF WATER
PLATEFORME FLOTTANTE POUR LA FIXATION D'UNE ÉOLIENNE FLOTTANTE SUR UN SOL IMMERGÉ

(30) Priorität: 06.06.2018 DE 102018113468
(43) Veröffentlichungstag der Anmeldung: 14.04.2021
(73) Patentinhaber: aerodyn consulting Singapore pte ltd, Singapore 048622 (SG)
(72) Erfinder: SIEGFRIEDSEN, Sönke, 24768 Rendsburg (DE)
(74) Vertreter: Lobemeier, Martin Landolf
(86) Internationale Anmeldenummer: PCT/IB2019/000454
(87) Internationale Veröffentlichungsnummer: WO 2019/234489

(56) Entgegenhaltungen:
- EP-A1- 2 933 181
- WO-A1-87/05876
- WO-A1-02/073032
- WO-A1-2018/054419
- WO-A2-2011/083021
- DE-A1-102014 109 212

## Beschreibung

Die Erfindung betrifft die Befestigung einer schwimmenden Windenergieanlage an einem Gewässergrund mittels einer am Gewässergrund verankerten Mooring-Boje, wobei die schwimmende Windenergieanlage eine sich in Richtung des Gewässergrunds öffnende Ausnehmung zur Aufnahme der Mooring-Boje aufweist.

Aus der DE 10 2016 118 079 B3 ist bereits eine schwimmende Windenergieanlage mit einer sich in Richtung des Gewässergrunds öffnenden Ausnehmung zur Aufnahme einer am Gewässergrund verankerten Mooring-Boje bekannt. Zum Einsetzen der Mooring-Boje in die Ausnehmung der Windenergieanlage wird dort vorgeschlagen, die Mooring-Boje durch Fluten von in dieser vorgesehenen Ballastwassertanks abzusenken, die Ausnehmung der Windenergieanlage oberhalb der abgesenkten Mooring-Boje zu positionieren und die Mooring-Boje durch Auftauchen lassen mittels Entleeren der Ballastwassertanks in die Ausnehmung einzusetzen.

Praktische Erwägungen haben jedoch gezeigt, dass es schwierig sein wird, die Ausnehmung der Windenergieanlage exakt oberhalb der unter der Gewässeroberfläche abgesenkten Mooring-Boje zu positionieren. Dabei wird die exakte Ausrichtung der Windenergieanlage zur unterhalb der Wasseroberfläche angeordneten Mooring-Boje auch durch die Wetterlage und den Seegang erschwert - siehe auch die DE 10 2014 109 212 A1 und die WO 2018/054419 A1.

Aufgabe der Erfindung ist es daher, eine Vorrichtung und ein Verfahren zu schaffen, mit der eine an einem Gewässergrund verankerte Mooring-Boje in eine sich in Richtung des Gewässergrunds öffnende Ausnehmung einer Windenergieanlage auch bei schwierigen Wetterlagen in einfacher Art und Weise eingesetzt werden kann.

Diese Aufgabe wird erfindungsgemäß durch die Plattform mit den Merkmalen von Anspruch 1 gelöst. Die Aufgabe wird darüber hinaus durch das Wasserfahrzeug gemäß Anspruch 6, das System gemäß Anspruch 7 und das Verfahren gemäß Anspruch 8 gelöst. Die abhängigen Ansprüche geben jeweils vorteilhafte Ausgestaltungen der Erfindung wieder.

Grundgedanke der Erfindung ist es, eine Plattform zu schaffen, die eine exakte Positionierung einer schwimmenden Windenergieanlage mit einer sich in Richtung des Gewässergrunds öffnenden Ausnehmung zur Aufnahme einer Mooring-Boje in Relation zur erfindungsgemäßen Plattform ermöglicht, wodurch bei vorbekannter Geometrie der Plattform, der Windenergieanlage und der Mooring-Boje die Voraussetzung geschaffen ist, um die Mooring-Boje mittels eines an der Plattform eingerichteten Aktors in die Ausnehmung der Windenergieanlage einzusetzen.

Der Aktor ist dabei als Lift oder als Schwenkarm ausgebildet, wobei die Mooring-Boje aus einer ersten Position, in der die Mooring-Boje oberhalb der Wasseroberfläche angeordnet ist und mit den Ankerleinen verbunden werden kann, in eine zweite Position, in der die Mooring-Boje unterhalb der Gewässeroberfläche und insbesondere unterhalb einer schwimmenden Windenergieanlage angeordnet ist, und schließlich in eine dritte Position gebracht werden kann, in der die Mooring-Boje in die Ausnehmung der Windenergieanlage eingesetzt ist.

Erfindungsgemäß ist also eine schwimmende Plattform für die Befestigung einer schwimmenden Windenergieanlage an einem Gewässergrund mittels einer am Gewässergrund verankerten Mooring-Boje vorgesehen, wobei die schwimmende Windenergieanlage eine sich in Richtung des Gewässergrunds öffnende Ausnehmung zur Aufnahme der Mooring-Boje aufweist, wobei die schwimmende Plattform ein als Andockzone ausgebildetes Positionierungsmittel zum Positionieren der schwimmenden Windenergieanlage in einer vorbestimmten Position relativ zur schwimmenden Plattform, und einen als Lift oder Schwenkarm ausgebildeten Aktor zum Absenken der Mooring-Boje nach unterhalb der Plattform und Einsetzen der Mooring-Boje in die Ausnehmung der schwimmenden Windenergieanlage durch Anheben der Mooring-Boje aufweist.

Das Positionierungsmittel ist eine an der Plattform vorgesehene Struktur, an der die Windenergieanlage an der Plattform anlegen bzw. anliegen kann, wobei das Positionierungsmittel eine Andockzone zum Andocken der schwimmenden Windenergieanlage an der schwimmenden Plattform ist, die speziell U-förmig ausgebildet ist. Besonders bevorzugt vorgesehen sind die Andockzone und ein Abschnitt der schwimmenden Windenergieanlage komplementär zueinander ausgebildet, sodass Windenergieanlage und Plattform quasi zusammengesteckt werden können. Insbesondere können die den Formschluss bildenden Elemente elastisch ausgebildet sein.

Weiter weist die Plattform wenigstens eine Seilwinde zum Anziehen der schwimmenden Windenergieanlage an die schwimmende Plattform auf. Insbesondere weist die Windenergieanlage Anschlagpunkte zur Befestigung des Seils der Seilwinde auf, wobei die Seilwinde und die Anschlagpunkte der Windenergieanlage so zu einander ausgerichtet sind, dass die Windenergieanlage mittels der Seilwinde an das Positionierungsmittel der Plattform, insbesondere an die Andockzone der Plattform, herangezogen wird.

Alternativ kann ein horizontal beweglicher Greifmechanismus vorgesehen sein, der die Plattform und die Windenergieanlage zusammenfährt und kraftschlüssig miteinander verbindet. Beispielsweise kann dieser Greifmechanismus als Spannpratze ausgebildet sein.

Zur Fixierung der Windenergieanlage an der Plattform sind bevorzugt Verbindungsmittel zum Verbinden der schwimmenden Plattform mit der schwimmenden Windenergieanlage vorgesehen. Diese können insbesondere im Bereich der Andockzone der Plattform vorgesehen sein.

Der Aktor zum Absenken der Mooring-Boje nach unterhalb der Plattform und Einsetzen der Mooring-Boje in die Ausnehmung der schwimmenden Windenergieanlage durch Anheben der Mooring-Boje ist erfindungsgemäß als Lift oder als Schwenkarm ausgebildet.

Ist der Aktor als Lift ausgebildet, muss sichergestellt sein, dass die Mooring-Boje von einer oberhalb der Wasseroberfläche angeordneten Position in eine unterhalb der Wasseroberfläche und unterhalb der Windenergieanlage angeordnete Position verbracht und von dort in die Windenergieanlage eingesetzt werden kann. Dieses kann beispielsweise dadurch bewirkt werden, dass der Lift so angeordnet ist, dass die Mooring-Boje innerhalb der Dockingzone verfahrbar ist und die Ausnehmung in der Windenergieanlage, in der die Mooring-Boje eingesetzt werden soll, innerhalb der Dockingzone im Bereich des Lifts angeordnet werden kann.

Ist der Aktor hingegen als Schwenkarm ausgebildet, so muss sichergestellt sein, dass die Ausnehmung der Windenergieanlage im Schwenkbereich des Aktors zu liegen kommt. Dabei ist der Schwenkarm ebenfalls so ausgestaltet, dass die Mooring-Boje von einer oberhalb der Wasseroberfläche angeordneten Position in eine unterhalb der Wasseroberfläche und unterhalb der Windenergieanlage angeordnete Position verbracht und von dort in die Windenergieanlage eingesetzt werden kann. Hierfür müssen die Geometrie und die Gelenkpunkte des Schwenkmechanismus so ausgestaltet sein, dass die Mooring-Boje in angedockter Position aus der ersten Position exakt in die Ausnehmung der Windenergieanlage von unten eingeführt werden kann, ohne dabei an die Wände der Windenergieanlage zu stoßen und gegebenenfalls dabei zu beschädigen. Der Schwenkvorgang wird dabei insbesondere durch die konische Form der Mooring-Boje erleichtert.

Besonders bevorzugt ist der Aktor so ausgebildet, dass die Mooring-Boje auf der Plattform mit dem Aktor verbunden werden kann.

Eine besonders vorteilhafte Ausgestaltung wird erreicht, wenn die Plattform als Deck eines Wasserfahrzeugs ausgebildet ist. Dabei kann das Deck besonders vorteilhafte Eigenschaften aufweisen. Weist das Deck beispielsweise eine U-förmige Andockzone auf, ist bevorzugt vorgesehen, dass die U-förmige Andockzone von einer Arbeitsplattform abgedeckt werden kann. Besonders bevorzugt kann die Arbeitsplattform im Rumpf des Wasserfahrzeugs aufgenommen und aus diesem ausgefahren werden.

Weiter wird ein System zur Installation einer schwimmenden Windenergieanlage vorgeschlagen, das aus der vorgenannten schwimmenden Plattform, einer schwimmenden Windenergieanlage mit einer auf deren Unterseite angeordneten Ausnehmung zur Aufnahme einer an einem Gewässergrund befestigbaren Mooring-Boje und einer in die Ausnehmung der schwimmenden Windenergieanlage einsetzbaren Mooring-Boje zur Befestigung der schwimmenden Windenergieanlage an einem Gewässergrund besteht.

Schließlich weist ein Verfahren nach der Erfindung zum Befestigen einer schwimmenden Windenergieanlage an einem Gewässergrund mittels einer am Gewässergrund verankerten Mooring-Boje, wobei die schwimmende Windenergieanlage eine sich in Richtung des Gewässergrunds öffnende Ausnehmung zur Aufnahme der Mooring-Boje aufweist, die folgenden Schritte auf:
a. Transportieren wenigstens einer Mooring-Boje und einer schwimmenden Plattform zum Ort der Installation der schwimmenden Windenergieanlage,
b. Verankern der Mooring-Boje am Gewässergrund mittels wenigstens einem Verankerungsmittel,
c. Absenken der Mooring-Boje nach unterhalb der Gewässeroberfläche mittels eines an der schwimmenden Plattform befestigten Aktors,
d. Transportieren der schwimmenden Windenergieanlage zum Ort der Installation und Befestigen der schwimmenden Windenergieanlage an der schwimmenden Plattform in einer vorbestimmten Position relativ zur schwimmenden Plattform,
e. Einsetzen der Mooring-Boje in die an der Unterseite der schwimmenden Windenergieanlage angeordnete Ausnehmung durch Anheben der Mooring-Boje mittels des an der schwimmenden Plattform befestigten Aktors.

Bevorzugt werden die Ankerleinen zur Befestigung der Mooring-Boje vor Schritt a. am Gewässergrund befestigt. An den freien Enden der Ankerleinen werden kann bevorzugt als Markierungsbojen ausgebildete Schwimmkörper befestigt, die dann an einer Hilfsboje zusammengeführt und daran befestigt werden, vorzugweise durch einen Formschluss der Schwimmkörper mit der Hilfsboje.

Schritt b. wird entsprechend bevorzugt dadurch bewirkt, dass die mit den freien Enden der Ankerleinen (und dem Seekabel) verbundene Hilfsboje eingefangen wird und die Ankerleinen sowie das Seekabel mit der Mooring-Boje in der jeweils richtigen Länge verbunden werden.

Das Verfahren wird besonders effizient und zeitsparend ausgeführt, wenn die Mooring-Boje auf der schwimmenden Plattform transportiert wird. Insbesondere weist die Plattform hierfür einen Abschnitt auf, in dem eine Mehrzahl von Mooring-Bojen transportiert werden kann.

Das Absenken und/oder Anheben der Mooring-Boje erfolgt besonders bevorzugt unter gleichzeitigem Verschwenken der Mooring-Boje, insbesondere in dem Fall, in dem der im Zusammenhang mit der Plattform genannten Aktor als Schwenkarm ausgebildet ist.

Nachdem die Mooring-Boje in die schwimmende Windenergieanlage eingesetzt ist, werden diese beiden Komponenten beispielsweise mittels wenigstens einer Schraubverbindung miteinander verbunden.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine Hilfsboje zum Vorhalten von am Gewässergrund verankerter Ankerleinen und eines Seekabels;
- Fig. 2: eine besonders bevorzugt ausgestaltete Vorrichtung nach der Erfindung in Form eines Wasserfahrzeugs beim Annähern an eine Ankerleinen und ein Seekabel vorhaltende Hilfsboje;
- Fig. 3: das in Fig. 2 dargestellte Wasserfahrzeug nach Aufnahme der Hilfsboje bei der Befestigung der Ankerleinen und des Seekabels an der Mooring-Boje;
- Fig. 4: das Wasserfahrzeug der an den Ankerleinen befestigten und mit dem Seekabel verbundenen Mooring-Boje nach Absenkung unterhalb der Wasserlinie;
- Fig. 5: eine Übersicht über das Wasserfahrzeug in dem in Fig. 4 dargestellten Zustand bei Annäherung einer schwimmenden Windenergieanlage mithilfe von zwei Schleppern;
- Fig. 6: eine Draufsicht auf das Wasserfahrzeug mit der mit den Ankerleinen und dem Seekabel verbundenen Mooring-Boje im abgesenkten Zustand und an das Wasserfahrzeug angedockter Windenergieanlage;
- Fig. 7: eine Seitenansicht auf das Wasserfahrzeug in dem in Fig. 6 gezeigten Zustand; und
- Fig. 8: eine Seitenansicht mit an das Wasserfahrzeug angedockter Windenergieanlage und in die Windenergieanlage eingesetzter Mooring-Boje.

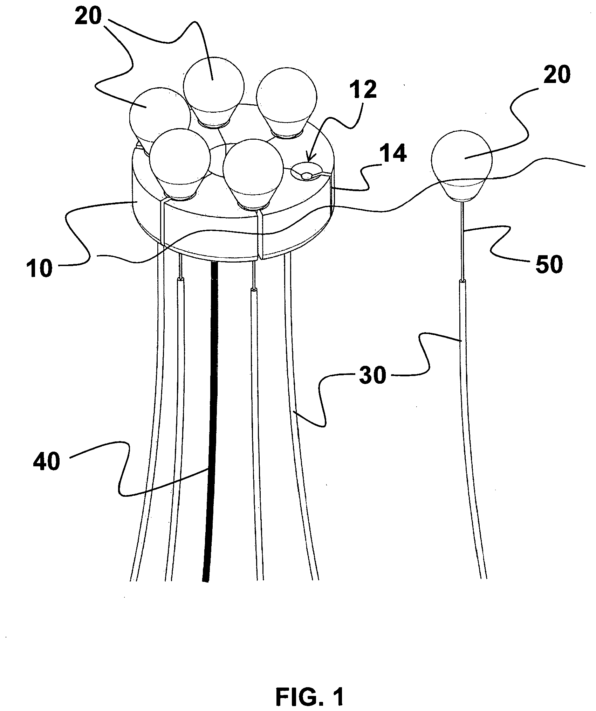

Fig. 1 zeigt eine Hilfsboje zum Vorhalten von am Gewässergrund verankerter Ankerleinen und eines Seekabels.

Zur Installation einer schwimmenden Windenergieanlage mit einer sich in Richtung des Gewässergrunds öffnenden Ausnehmung zur Aufnahme einer am Gewässergrund verankerten Mooring-Boje in einem dafür vorgesehenen Bereich eines Gewässers, beispielsweise eines Offshore-Windparks, ist es zunächst notwendig, den Ort der Errichtung durch Installieren von Ankerleinen 30 und des Seekabels 40 vorzubereiten. Diese Ankerleinen 30 werden im Gewässergrund verankert, wobei deren freies Ende mit einem Schwimmkörper 20 versehen wird, der auf der Gewässeroberfläche schwimmt.

Da die einzelnen Ankerleinen 30 in der Mooring-Boje zusammengeführt werden sollen, ist es vorteilhaft, die mit den Schwimmkörpern 20 versehenen freien Enden der Ankerleinen 30 räumlich zusammenzuführen. Vorliegend wird hierfür eine Hilfsboje 10 vorgeschlagen, die als schwimmfähige Plattform mit Seildurchführungen zur Durchführung der Ankerleinen 30 ausgebildet ist, wobei die axial durch die Hilfsboje 10 geführten Seildurchführungen radiale Schlitze aufweisen, durch die die Ankerleinen 30 seitlich in die Seildurchführungen der Hilfsboje 10 eingesetzt werden können. Die Schwimmkörper 20 bleiben dabei mit den Ankerleinen 30 verbunden, wobei die Hilfsboje 10 auf deren Oberseite komplementäre Mulden zum Platzieren der Schwimmkörper 20 aufweist, die um die Seildurchführungen angeordnet sind.

Derart können am Gewässergrund verankerte Ankerleinen 30 auf der Gewässeroberfläche gebündelt und zur weiteren Verarbeitung bereitgehalten werden. Zusätzlich wird auch das Seekabel 40 an der Hilfsboje 10, bevorzugt zentrisch befestigt, sodass die Vorbereitungen zur Installation der schwimmenden Windenergieanlage abgeschlossen sind.

Um das Zusammenführen der Ankerleinen 30 zu erleichtern, sind an den Schwimmkörpern 20 leichte Kunststofftau 50 befestigt, die mit den freien Enden verbunden werden. Dadurch können die Schwimmkörper 20 leicht wiederverwendet werden, wobei zugleich die Handhabung der freien Enden der Ankerleinen 30 deutlich erleichtert ist.

Die Hilfsboje 10 und/oder die Schwimmkörper 20 können dabei mit elektronischen Ortungshilfen ausgestattet oder besonders markiert sein, z.B. durch eine sich von der Gewässeroberfläche absetzenden Farbe, sodass das Auffinden des Installationsorts der schwimmenden Windenergieanlage vereinfacht ist.

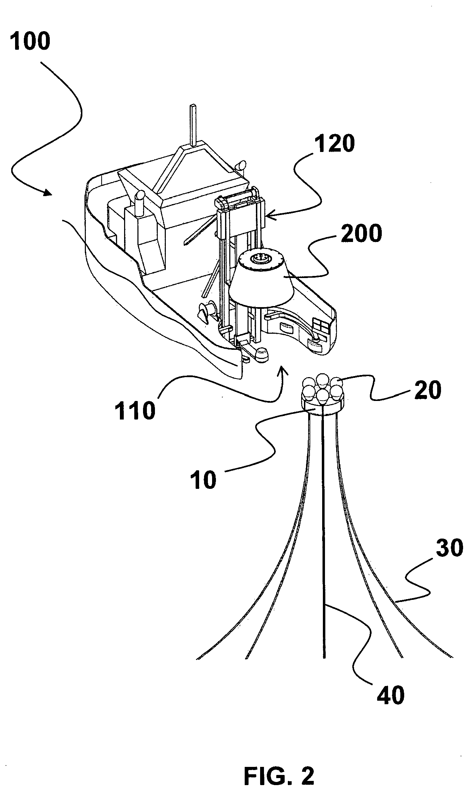

Nach Abschluss der Vorbereitung der Verankerung der Ankerleinen 30 am Gewässergrund und Lagern der mit Schwimmkörpern 20 ausgestatteten Ankerleinen in der Hilfsboje zeigt Fig. 2 nun einen weiteren Verfahrensschritt bei dem sich eine besonders bevorzugt ausgestaltete Vorrichtung nach der Erfindung in Form eines Wasserfahrzeugs 100 an die Ankerleinen 30 und ein Seekabel 40 vorhaltende Hilfsboje 10 annähert.

Das Wasserfahrzeug 100 weist ein als Hilfsplattform ausgebildetes Deck mit einer U-förmigen Andockzone 110 auf, die - wie später noch gezeigt werden wird - die schwimmende Windenergieanlage teilweise aufnehmen wird.

Auf dem Deck des Wasserfahrzeugs 100 ist ein Lift 120 installiert, der sich senkrecht durch die Andockzone 110 erstreckt und im gezeigten Beispiel bereits eine Mooring-Boje 200 trägt. Die Mooring-Boje 200 ist so mittels des Lifts 120 von oberhalb des Decks nach unterhalb der Gewässeroberfläche verfahrbar.

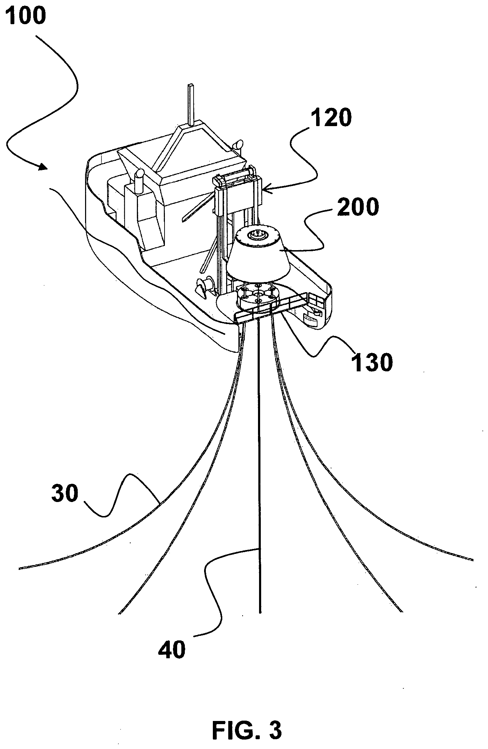

Das Wasserfahrzeug 100 weist auf seinem Deck weitere Besonderheiten auf, die für das weitere Verfahren zur Installation einer schwimmenden Windenergieanlage besonders hilfreich sind. So ist einerseits zu erkennen, dass die Andockzone 110 seitlich verfahrbare Verbindungsmittel zum Verbinden des Wasserfahrzeugs 100 mit der schwimmenden Windenergieanlage aufweist. Andererseits ist eine vom Deck bzw. Wasserfahrzeug aufgenommene Arbeitsplattform 130 vorgesehen, die die Andockzone 110 in einer ersten Position - wie in Fig. 2 gezeigt - freigibt und in einer zweiten Position - wie in Fig. 3 gezeigt - die U-förmige Öffnung der Andockzone 110 überdeckt.

Die die Andockzone 110 überdeckende Plattform 130 kann weitere Mittel zur Absicherung des an Deck tätigen Personals, beispielsweise ein Geländer, aufweisen. Insbesondere ist die Arbeitsplattform 130 so ausgebildet, dass diese die Hilfsboje 100 mit den daran befestigten Ankerleinen 30 aufnehmen kann, die besonders bevorzugt unterhalb der auf dem Lift 120 angeordneten Mooring-Boje 200 zu liegen kommt. Die im Deck integrierte Arbeitsplattform 130 weist hierfür wiederum Durchlässe zum Durchführen der Ankerleinen 30 auf.

Durch Aufnahme der Hilfsboje 100 an Deck des Wasserfahrzeugs 100 wird das Wasserfahrzeug 100 mit dem Gewässergrund verankert, sodass Relativbewegungen zwischen der Hilfsboje 10 und der Mooring-Boje 200 ausgeschlossen sind. Die vorteilhafte Anordnung der Hilfsboje 10 auf der Arbeitsplattform 130 und insbesondere unterhalb der auf dem Lift 120 angeordneten Mooring-Boje 200 ermöglicht die einfache Befestigung der von der Hilfsboje 10 vorgehaltenen Ankerleinen 30 und des Seekabels 40 an der Mooring-Boje 200.

Durch das Befestigen der Ankerleinen 30 an der Mooring-Boje 200 wird also die Mooring-Boje 200 unmittelbar und damit auch das Wasserfahrzeug 100 mittelbar am Gewässergrund befestigt. Das Verankern der Mooring-Boje 200 am Gewässergrund erfolgt bevorzugt unter gleichzeitigem Vorspannen der Ankerleinen 30 auf einen vorbestimmten Wert.

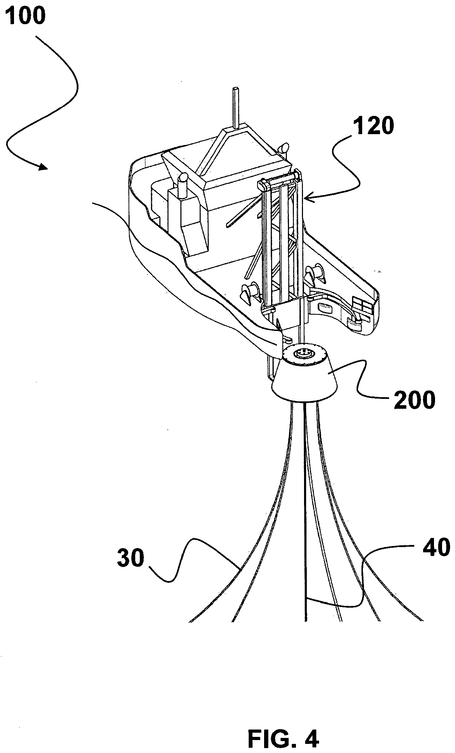

Jedenfalls werden - wie Fig. 4 zeigt - in einem nächsten Schritt die Hilfsboje 10 und die Arbeitsplattform 130 entfernt und die an den Ankerleinen 30 befestigte Mooring-Boje 200, an der auch das Seekabel 40 befestigt ist, mittels des Lifts 120 durch die Andockzone 110 des Wasserfahrzeugs 100 nach unterhalb der Gewässeroberfläche abgesenkt. Dabei bleibt die Mooring-Boje 200 fest mit dem Wasserfahrzeug 100 verbunden.

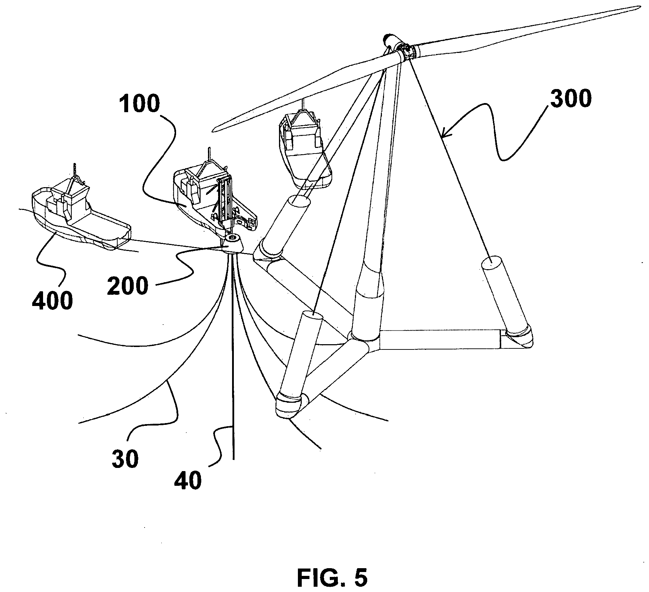

In Fig. 5 ist nun eine Momentaufnahme gezeigt, bei der eine schwimmende Windenergieanlage 300 mit Hilfe von zwei Schleppern 400 in Richtung der als Wasserfahrzeug 100 ausgebildeten schwimmenden Plattform gezogen wird.

Es ist deutlich zu sehen, dass ein Teilbereich der schwimmenden Windenergieanlage 300 komplementär zur Andockzone 130 des Wasserfahrzeugs 100 ausgebildet ist, sodass der komplementär zur Andockzone 130 ausgebildete Teil der Windenergieanlage 300 in die Andockzone 130 des Wasserfahrzeugs 100 oberhalb der abgesenkten Mooring-Boje 200 eingesetzt werden kann. Dieser Teilbereich, auch Frontconnector genannt, ist bevorzugt aus Stahl gefertigt und dient als Verbindung zwischen Betonteil des Fundaments, Schwimmer und Mooring-Boje.

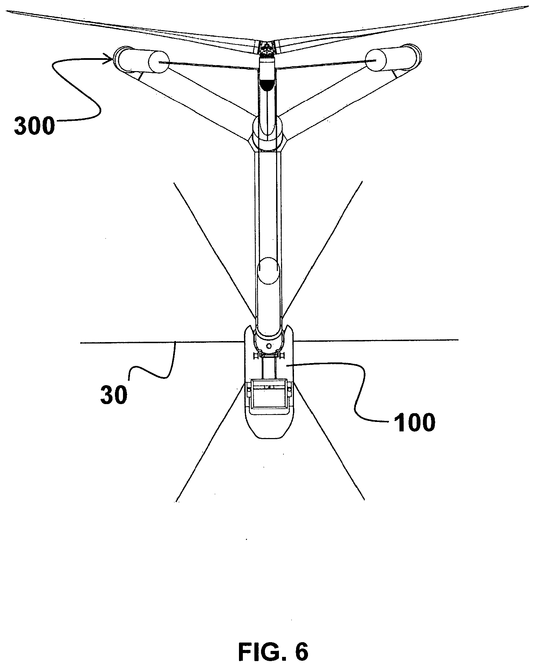

Dieses ist noch einmal in Fig. 6 verdeutlicht, in der eine Draufsicht auf das Wasserfahrzeug 100 mit der mit den Ankerleinen 30 und dem Seekabel 40 verbundenen Mooring-Boje 200 im abgesenkten Zustand und an das Wasserfahrzeug 100 angedockter Windenergieanlage 300 dargestellt ist.

Bevorzugt ist die Windenergieanlage 300 mithilfe von am Wasserfahrzeug 100 vorgesehenen Verbindungsmitteln mit dem Wasserfahrzeug 100 verbunden. Insbesondere weist das Wasserfahrzeug 100 besonders bevorzugt Seilwinden auf, die mittels entsprechender Seile und an der Windenergieanlage 300 vorgesehener Anschlagpunkte, die Windenergieanlage 300 an das Wasserfahrzeug 100 anziehen.

Durch die feste Verbindung zwischen Wasserfahrzeug 100 und Windenergieanlage 300 einerseits und durch die zuvor erfolgte Verankerung zwischen der mit dem Wasserfahrzeug 100 verbundenen Mooring-Boje 200 mit dem Gewässergrund, sind sowohl Relativbewegungen zwischen der Mooring-Boje 200 und dem Wasserfahrzeug 100, als auch zwischen dem Wasserfahrzeug 100 und der Windenergieanlage 300 ausgeschlossen. Durch die erfindungsgemäße Anordnung ist die schwimmende Windenergieanlage 300 also bereits in diesem Zustand, wenngleich nur mittelbar, mit dem Gewässergrund verbunden.

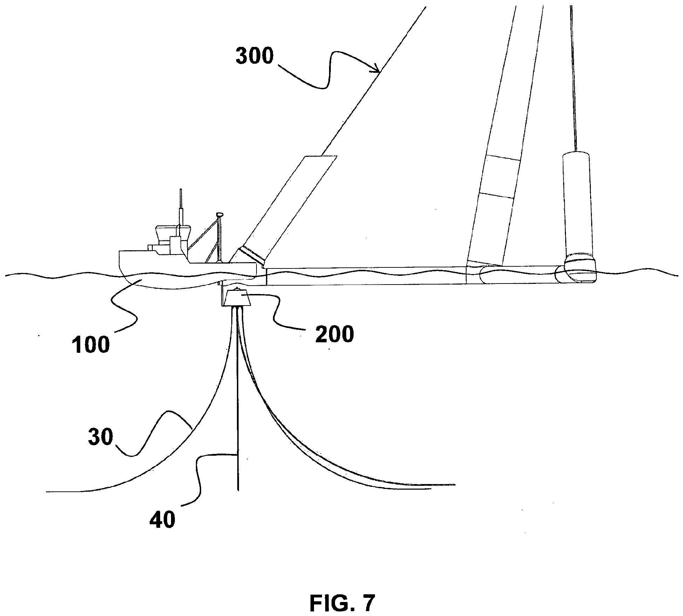

Fig. 7 verdeutlicht noch einmal die geometrischen Verhältnisse des Wasserfahrzeugs 100, der Mooring-Boje 200 und der schwimmenden Windenergieanlage 300 zueinander in einer Seitenansicht.

Es ist deutlich zu erkennen, dass die aus Wasserfahrzeug 100, daran befestigter Mooring-Boje 200 und am Wasserfahrzeug 100 befestigter Windenergieanlage 300 mittels der an der Mooring-Boje 200 befestigten Ankerleinen 30 am Gewässergrund befestigt ist. Dabei befindet sich die am Lift 120 befestigte Mooring-Boje 200 in einem Bereich unterhalb der Gewässeroberfläche und unterhalb der Windenergieanlage 300. Insbesondere befindet sich die am Lift 120 befestigte Mooring-Boje 200 unterhalb einer sich in Richtung des Gewässergrunds öffnende Ausnehmung der Windenergieanlage 300, die zur Aufnahme der Mooring-Boje 200 eingerichtet ist.

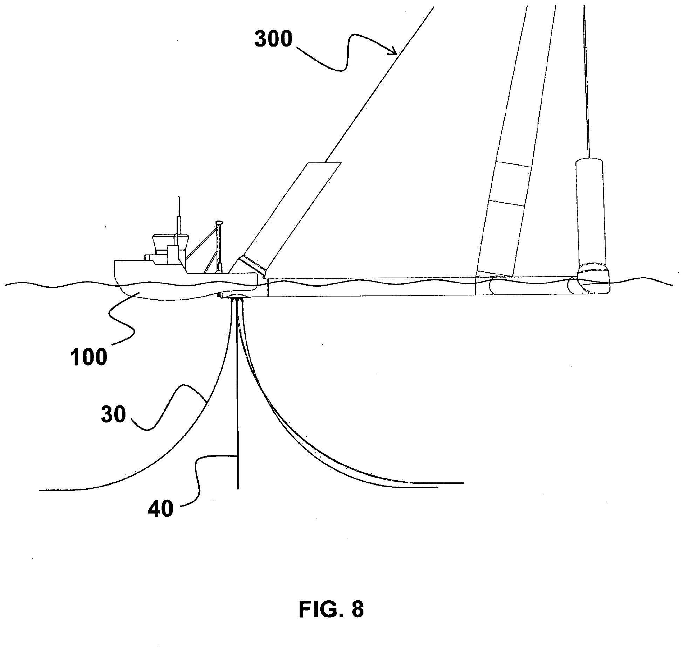

Durch Anheben der Mooring-Boje 200 mittels des am Wasserfahrzeug 100 befestigten Lifts 120 wird die Mooring-Boje 200 in die über dieser angeordnete Ausnehmung der Windenergieanlage 300 eingesetzt und mit dieser verbunden, sodass die Windenergieanlage 300, wie Fig. 8 zeigt, unmittelbar am Gewässergrund verankert ist. Für eine strapazierfähige und reversible Verbindung zwischen Mooring-Boje 200 und schwimmender Windenergieanlage 300 können beispielsweise Schraubverbindungen eingesetzt werden. In jedem Fall ist das Wasserfahrzeug 100 in diesem Zustand nur noch mittelbar, nämlich über die Windenergieanlage 300, mit dem Gewässergrund verbunden. Durch Lösen der Verbindung zwischen Wasserfahrzeug 100 und Windenergieanlage 300 kann das Wasserfahrzeug 100 - das Mitführen weiterer Mooring-Boj en 200 vorausgesetzt - zu einem weiteren Installationsort einer weiteren schwimmenden Windenergieanlage 300 fahren.

Das Wasserfahrzeug 100 kann selbstverständlich auch zu anderen Zwecken, insbesondere zum Installieren der Hilfsbojen 10 eingesetzt werden. Das Wasserfahrzeug 100 weist neben dem Hauptantrieb zur (schnellen) Fortbewegung insbesondere auch Positionierantriebe zur genauen Ausrichtung des Wasserfahrzeugs 100 mit der Windenergieanlage 300 auf, z.B. einen Wasserstrahl- oder einen Voith-Schneider-Antrieb.

## Patentansprüche

1. Schwimmende Plattform (100) für die Befestigung einer schwimmenden Windenergieanlage (300) an einem Gewässergrund mittels einer am Gewässergrund verankerten Mooring-Boje (200), wobei die schwimmende Windenergieanlage (300) eine sich in Richtung des Gewässergrunds öffnende Ausnehmung zur Aufnahme der Mooring-Boje (200) aufweist,
**dadurch gekennzeichnet, dass**
die Schwimmende Plattform (100)
ein als Andockzone ausgebildetes Positionierungsmittel (110) zum Positionieren der schwimmenden Windenergieanlage (300) in einer vorbestimmten Position relativ zur schwimmenden Plattform (100), und
einen als Lift oder Schwenkarm ausgebildeten Aktor (120) zum Absenken der Mooring-Boje (200) nach unterhalb der Plattform (100) und Einsetzen der Mooring-Boje (200) in die Ausnehmung der schwimmenden Windenergieanlage (300) durch Anheben der Mooring-Boje (200) aufweist.

2. Schwimmende Plattform (100) nach Anspruch 1, **dadurch gekennzeichnet, dass** die Andockzone U-förmig ausgebildet ist.

3. Schwimmende Plattform (100) nach einem der vorhergehenden Ansprüche, **gekennzeichnet durch** wenigstens eine Seilwinde zum Anziehen der schwimmenden Windenergieanlage (300) an die schwimmende Plattform (100).

4. Schwimmende Plattform (100) nach einem der vorhergehenden Ansprüche, **gekennzeichnet durch** wenigstens eine Spannpratze zum Anziehen der schwimmenden Windenergieanlage (300) an die schwimmende Plattform (100) und zur mechanischen Fixierung der schwimmenden Windenergieanlage (300) an der schwimmenden Plattform (100).

5. Schwimmende Plattform (100) nach einem der vorhergehenden Ansprüche, **gekennzeichnet durch** Verbindungsmittel zum Verbinden der schwimmenden Plattform (100) mit der schwimmenden Windenergieanlage (300).

6. Wasserfahrzeug mit einem als schwimmende Plattform (100) nach einem der vorhergehenden Ansprüche ausgebildeten Deck.

7. System bestehend aus
- einer schwimmenden Plattform (100) nach einem der Ansprüche 1 bis 6,
- einer schwimmenden Windenergieanlage (300) mit einer auf deren Unterseite angeordneten Ausnehmung zur Aufnahme einer an einem Gewässergrund befestigbaren Mooring-Boje (200), und
- einer in die Ausnehmung der schwimmenden Windenergieanlage (300) einsetzbaren Mooring-Boje (200) zur Befestigung der schwimmenden Windenergieanlage (300) an einem Gewässergrund.

8. Verfahren zum Befestigen einer schwimmenden Windenergieanlage (300) an einem Gewässergrund mittels einer am Gewässergrund verankerten Mooring-Boje (200), wobei die schwimmende Windenergieanlage (300) eine sich in Richtung des Gewässergrunds öffnende Ausnehmung zur Aufnahme der Mooring-Boje (200) aufweist, mit den Schritten:
a. Transportieren wenigstens einer Mooring-Boje (200) und einer schwimmenden Plattform (100) zum Ort der Installation der schwimmenden Windenergieanlage (300),
b. Verankern der Mooring-Boje (200) am Gewässergrund mittels wenigstens einem Verankerungsmittel (30),
c. Absenken der Mooring-Boje (200) nach unterhalb der Gewässeroberfläche mittels eines an der schwimmenden Plattform (100) als Lift oder Schwenkarm befestigten Aktors (120),
d. Transportieren der schwimmenden Windenergieanlage (300) zum Ort der Installation und Befestigen der schwimmenden Windenergieanlage (300) an der schwimmenden Plattform (100) in einer vorbestimmten Position relativ zur schwimmenden Plattform (100),
e. Einsetzen der Mooring-Boje (200) in die an der Unterseite der schwimmenden Windenergieanlage (300) angeordnete Ausnehmung durch Anheben der Mooring-Boje (200) mittels des an der schwimmenden Plattform (100) als Lift oder Schwenkarm befestigten Aktors (120).

9. Verfahren nach Anspruch 8, **dadurch gekennzeichnet, dass** die Mooring-Boje (200) auf der schwimmenden Plattform (100) transportiert wird.

10. Verfahren nach einem der Ansprüche 8 und 9, **dadurch gekennzeichnet, dass** das Verankern der Mooring-Boje (30) am Gewässergrund (20) das Vorspannen des Verankerungsmittels beinhaltet.

11. Verfahren nach einem der Ansprüche 8 und 10, **dadurch gekennzeichnet, dass** das Absenken und/oder Anheben der Mooring-Boje (30) unter gleichzeitigem Verschwenken der Mooring-Boje (30) erfolgt.

## Claims

1. Floating platform (100) for the attachment of a floating wind turbine (300) to the bottom of a body of water by means of a mooring buoy (200) anchored to the bottom of the body of water, wherein the floating wind turbine (300) has a recess opening in the direction of the bottom of the body of water for receiving the mooring buoy (200)
**characterized in that**
the floating platform (100) comprises a positioning means (110) in the form of a docking zone for positioning the floating wind turbine (300) in a predetermined position relative to the floating platform (100), and
an actuator (120) designed as a lift or swivel arm for lowering the mooring buoy (200) below the platform (100) and inserting the mooring buoy (200) into the recess of the floating wind turbine (300) by lifting the mooring buoy (200).

2. Floating platform (100) according to claim 1, **characterised in that** the docking zone is U-shaped.

3. Floating platform (100) according to one of the preceding claims, **characterised by** at least one cable winch for attracting the floating wind turbine (300) to the floating platform (100).

4. Floating platform (100) according to one of the preceding claims, **characterised by** at least one clamping claw for tightening the floating wind turbine (300) to the floating platform (100) and for mechanically fixing the floating wind turbine (300) to the floating platform (100).

5. Floating platform (100) according to one of the preceding claims, **characterised by** connecting means for connecting the floating platform (100) to the floating wind turbine (300).

6. Watercraft having a deck designed as a floating platform (100) according to one of the preceding claims.

7. System comprising
- a floating platform (100) according to one of the claims 1 bis 6,
- a floating wind turbine (300) with a recess arranged on its underside for receiving a mooring buoy (200) which can be fastened to the bottom of a body of water, and
- a mooring buoy (200) insertable into the recess of the floating wind turbine (300) for fastening the floating wind turbine (300) to the bottom of a body of water.

8. Method for fastening a floating wind turbine (300) to the bottom of a body of water by means of a mooring buoy (200) anchored to the bottom of the body of water, the floating wind turbine (300) having a recess opening in the direction of the bottom of the body of water for receiving the mooring buoy (200), comprising the steps of:
a. transporting at least one mooring buoy (200) and a floating platform (100) to the installation site of the floating wind turbine (300),
b. anchoring the mooring buoy (200) to the bottom of the body of water by means of at least one anchoring means (30),
c. lowering the mooring buoy (200) below the surface of the water by means of an actuator (120) attached to the floating platform (100) as a lift or swivel arm,
d. transporting the floating wind turbine (300) to the installation site and securing the floating wind turbine (300) to the floating platform (100) in a predetermined position relative to the floating platform (100),
e. inserting the mooring buoy (200) into the recess arranged on the underside of the floating wind turbine (300) by lifting the mooring buoy (200) by means of the actuator (120) attached to the floating platform (100) as a lift or swivel arm.

9. Method according to claim 8, **characterised in that** the mooring buoy (200) is transported on the floating platform (100).

10. Method according to one of claims 8 and 9, **characterised in that** the anchoring of the mooring buoy (30) to the bottom (20) of the body of water includes the pretensioning of the anchoring means.

11. Method according to one of claims 8 and 10, **characterised in that** the lowering and/or raising of the mooring buoy (30) takes place with simultaneous pivoting of the mooring buoy (30).

## Revendications

1. Plate-forme flottante (100) pour la fixation d'une éolienne flottante (300) sur un fond de l'eau au moyen d'une bouée d'amarrage (200) ancrée sur le fond de l'eau, dans laquelle l'éolienne flottante (300) présente un évidement ouvert en direction du fond de l'eau pour la réception de la bouée d'amarrage (200),
**caractérisée en ce que**
la plate-forme flottante (100) présente un moyen de positionnement (110) conçu comme une zone d'amarrage pour le positionnement de l'éolienne flottante (300) dans une position prédéterminée par rapport à la plate-forme flottante (100), et
un actionneur (120) conçu comme élévateur ou bras pivotant et permettant d'abaisser la bouée d'amarrage (200) au-dessous de la plate-forme (100) et d'insérer la bouée d'amarrage (200) dans l'évidement de l'éolienne flottante (300) en soulevant la bouée d'amarrage (200).

2. Plate-forme flottante (100) selon la revendication 1, **caractérisée en ce que** la zone d'amarrage est conçue en forme de U.

3. Plate-forme flottante (100) selon l'une des revendications précédentes, **caractérisée par** au moins un treuil permettant d'attirer l'éolienne flottante (300) vers la plate-forme flottante (100).

4. Plate-forme flottante (100) selon l'une des revendications précédentes, **caractérisée par** au moins une griffe de serrage permettant d'attirer l'éolienne flottante (300) vers la plate-forme flottante (100) et de fixer mécaniquement l'éolienne flottante (300) sur la plate-forme flottante (100).

5. Plate-forme flottante (100) selon l'une des revendications précédentes, **caractérisée par** des moyens de raccordement permettant de raccorder la plate-forme flottante (100) à l'éolienne flottante (300).

6. Véhicule marin comportant un pont conçu comme une plate-forme flottante (100) selon l'une des revendications précédentes.

7. Système constitué
- d'une plate-forme flottante (100) selon l'une des revendications 1 à 6,
- d'une éolienne flottante (300) comportant un évidement disposé sur sa face inférieure pour la réception d'une bouée d'amarrage (200) pouvant être fixée sur un fond de l'eau, et
- d'une bouée d'amarrage (200) pouvant être insérée dans l'évidement de l'éolienne flottante (300) pour la fixation de l'éolienne flottante (300) sur un fond de l'eau.

8. Procédé permettant la fixation d'une éolienne flottante (300) sur un fond de l'eau au moyen d'une bouée d'amarrage (200) ancrée sur le fond de l'eau, dans lequel l'éolienne flottante (300) présente un évidement ouvert en direction du fond de l'eau pour la réception de la bouée d'amarrage (200), comportant les étapes consistant à:
a. transporter au moins une bouée d'amarrage (200) et une plate-forme flottante (100) jusqu'à l'emplacement de l'installation de l'éolienne flottante (300),
b. ancrer la bouée d'amarrage (200) sur le fond de l'eau au moyen d'au moins un moyen d'ancrage (30),
c. abaisser la bouée d'amarrage (200) au-dessous de la surface de l'eau au moyen d'un actionneur (120) fixé sur la plate-forme flottante (100) comme élévateur ou bras pivotant,
d. transporter l'éolienne flottante (300) jusqu'à l'emplacement de l'installation et fixer l'éolienne flottante (300) sur la plate-forme flottante (100) dans une position prédéterminée par rapport à la plate-forme flottante (100),
e. insérer la bouée d'amarrage (200) dans l'évidement disposé sur la face inférieure de l'éolienne flottante (300) en soulevant la bouée d'amarrage (200) au moyen de l'actionneur (120) fixé sur la plate-forme flottante (100) comme élévateur ou bras pivotant.

9. Procédé selon la revendication 8, **caractérisé en ce que** la bouée d'amarrage (200) est transportée sur la plate-forme flottante (100).

10. Procédé selon l'une des revendications 8 et 9, **caractérisé en ce que** l'ancrage de la bouée d'amarrage (30) sur le fond de l'eau (20) comprend la précontrainte du moyen d'ancrage.

11. Procédé selon l'une des revendications 8 et 10, **caractérisé en ce que** l'abaissement et/ou le soulèvement de la bouée d'amarrage (30) sont effectués en faisant pivoter simultanément la bouée d'amarrage (30).
